# DEMANDE DE BREVET EUROPEEN

(11) **EP 4 765 047 A1**
(43) Date de publication de la demande: **24.06.2026**
(21) Numéro de dépôt: 24307141.2
(22) Date de dépôt: 17.12.2024
(51) Int. Cl.: G06V 20/52, G06T 11/00

(54) **PROCÉDÉ, PROGRAMME D'ORDINATEUR, DISPOSITIF ET SYSTÈME DE REPRÉSENTATION D'UNE SCÈNE**

(71) Demandeur: BULL SAS, 78340 Les Clayes-Sous-Bois (FR)
(72) Inventeur: METGE, Baptiste, 38000 Grenoble (FR); BLANC, Philippe, 35160 Talensac (FR); EL YAKOUBI, Ahmed, 38000 Grenoble (FR)
(74) Mandataire: IPAZ

(57) **Abrégé**

L'invention concerne un procédé (100) d'obtention d'une représentation d'une scène à partir d'images captées par une caméra, ledit procédé (100) comprenant au moins une itération d'une phase (110) de traitement, réalisée pour au moins une image courante de la scène, et comprenant les étapes suivantes :
-détection (112) d'au moins un objet mobile dans ladite image courante,
- pour au moins un objet mobile (112) :
▪ obtention d'un avatar ne comprenant aucun pixel appartenant audit objet mobile dans ladite image courante ;
▪ ajout dudit avatar dans une image de fond de ladite scène, préalablement captée et ne comprenant pas d'objet mobile, à la même position que ledit objet mobile dans ladite image courante ;

de sorte à obtenir une image finale de ladite scène.

Elle concerne également un programme d'ordinateur, un dispositif et un système mettant en oeuvre un tel procédé.

## Description

La présente invention concerne un procédé de représentation d'une scène en fonction d'images provenant d'une caméra fixe filmant ladite scène, en particulier pour la détection et le suivi d'objets mobiles dans ladite scène. Elle concerne également un programme d'ordinateur, un dispositif et un système mettant en oeuvre un tel procédé.

Le domaine de l'invention est de manière générale le domaine de la détection et du suivi d'objets dans une scène à partir d'images de ladite scène.

### État de la technique

On connait de nombreuses techniques qui permettent de détecter des objets dans une scène, et de suivre ces objets, à partir d'images provenant d'une caméra filmant ladite scène.

Ces techniques prévoient d'afficher une image, ou un flux d'images, sur un écran d'affichage sur lequel les objets, et en particulier les personnes, sont détectées et étiquetés pour permettre le suivi visuel de ces objets. Il est possible de détecter la position d'un objet à instant donné mais aussi de construire une tracklet représentant la trajectoire d'un objet dans une scène.

Or, ces techniques posent un problème de confidentialité, en particulier lorsque les objets suivis sont des personnes ou comportent des données personnelles, telles que des plaques d'immatriculation. Pour répondre à ce problème, la solution actuelle consiste à flouter, ou supprimer, les parties des images comportant des visages ou des données personnelles. Or, cette solution n'est pas satisfaisante car elle peut omettre de flouter/supprimer, ou de flouter/supprimer partiellement, des zones de l'image comportant des données personnelles pour différentes raisons : erreur de détection, faible qualité d'image, etc. De plus, une image floutée peut être défloutée *a posteriori* pour obtenir les données personnelles, ce qui n'est pas acceptable.

Un but de la présente invention est de remédier à au moins un des inconvénients de l'état de la technique.

Un autre but de l'invention est de proposer une solution de représentation d'une scène permettant une plus grande sécurité de données personnelles.

### Exposé de l'invention

L'invention propose d'atteindre au moins l'un des buts précités par un procédé d'obtention d'une représentation d'une scène à partir d'images captées par une caméra filmant ladite scène de manière statique de sorte que le champ de vue de ladite caméra est fixe, ledit procédé comprenant au moins une itération d'une phase de traitement, réalisée pour au moins une nouvelle image de la scène, dite image courante, captée par ladite caméra et comprenant au moins un objet mobile, ladite phase de traitement comprenant les étapes suivantes :
- détection d'au moins un objet mobile dans ladite image courante,
- pour au moins un objet mobile :
   ▪obtention d'un avatar ne comprenant aucun pixel appartenant audit objet mobile dans ladite image courante ;
   ▪ajout dudit avatar dans une image, dite image de fond, de ladite scène à la même position que ledit objet mobile dans ladite image courante, ladite image de fond étant préalablement captée et ne comprenant pas d'objet mobile.
de sorte à obtenir une image, dite finale, de ladite scène

Ainsi, l'invention propose, pour au moins une image courante de la scène, de détecter au moins un objet mobile se trouvant dans ladite image courante. Ensuite, un avatar est obtenu pour représenter cet objet mobile de manière anonyme. Cet avatar anonyme est ajouté à une image de fond représentant le fond de la scène, et ne comprenant aucun objet mobile, pour obtenir une image finale. Ainsi, l'image finale ne comprend aucune donnée, et plus précisément aucun pixel, appartenant à l'objet mobile se trouvant dans l'image courante. Cette opération peut être réalisée pour au moins un, ou pour plusieurs, voire pour tous les objets mobiles, se trouvant dans la scène au moment où l'image courante est captée.

L'invention permet une plus grande sécurité des données personnelles, voire de garantir que l'image finale ne comprend aucune donnée personnelle contrairement aux techniques actuelles. La technique utilisant le floutage des données personnelles peut être sujette à des erreurs et laisser passer des données personnelles, tout comme les techniques consistant à supprimer les objets. De telles erreurs ne peuvent pas se produire avec l'invention puisque celle-ci propose d'ajouter un ou des avatars complètement anonymes pour les objets mobiles sur une image de de fond ne comprenant aucun objet mobile.

Dans la présente demande, par « objet » on entend tout type d'objet vivant ou non, tel qu'un humain, un animal, une voiture, etc.

Dans la présente demande par « objet mobile », on entend un objet qui ne fait pas partie de la scène et qui peut entrer dans la scène, bouger dans la scène et sortir de la scène. En d'autres termes, un objet mobile ne fait pas partie du fond de la scène.

Par « objet statique », on entend un objet qui appartient au fond de la scène, c'est-à-dire à la définition de l'environnement constituant le fond de la scène.

Par « caméra », on entend tout type d'appareil d'acquisition d'une image, telle que tout type de caméra de type RGB, LIDAR, thermique, 3D, etc.

Par « image courante », on entend une image qui est en cours de traitement par la phase de traitement. L'image courante peut être image en temps réelle de la scène. L'image courante peut ne pas être une image en temps réel de la scène : dans ce cas, l'image courante à été préalablement captée et mémorisée dans une base de données et la phase de traitement de cette image est réalisée postérieurement, de manière décalée dans le temps, par rapport au moment de la captation de ladite image courante.

Suivant des modes de réalisation, le procédé selon l'invention peut comprendre, préalablement à la première itération de la phase de traitement une étape de captation de l'image de fond.

L'image de fond peut de préférence être captée par la même caméra.

Alternativement, l'image de fond peut de préférence être captée par une autre caméra ayant un champ de vue comprenant le champ de vue de la caméra utilisée pour capter la ou les images courantes. Dans ce cas, l'image fournie par l'autre caméra peut être ajustée, et en particulier découpée, pour l'ajuster au champ de vue de la caméra utilisée pour capter la ou les images courantes.

Suivant des modes de réalisation, la détection d'au moins un objet mobile peut être réalisée par toute technique connue, et l'invention ne porte pas sur une technique particulière de détection d'un objet mobile dans une image.

En particulier, la détection d'au moins un objet mobile dans l'image courante peut être réalisée par un modèle d'intelligence artificielle, et en particulier par un réseau neuronal préalablement entrainé pour cela. Par exemple, la détection d'au moins un objet mobile dans l'image courante peut être réalisé par un modèle de type Yolov4, Yolov8, etc. bien connu de la personne du métier

Pour au moins un objet mobile, l'avatar peut être obtenu selon toute technique adéquate, et l'invention n'est pas limitée à une technique particulière.

L'avatar peut être de toute forme, et l'invention n'est pas limitée à une forme particulière d'avatar.

L'avatar peut être de toute taille, et l'invention n'est pas limitée à une taille particulière d'avatar.

L'avatar peut être de toute couleur, et l'invention n'est pas limitée à une couleur particulière d'avatar.

Suivant des modes de réalisation, pour au moins un objet mobile, l'avatar peut être sélectionné dans une base de données.

Dans ce cas, l'étape d'obtention de l'avatar peut comprendre, ou consister en, une étape de lecture dudit avatar dans ladite base de données.

Optionnellement, il est possible d'associer un identifiant de l'objet mobile avec un identifiant de l'avatar qui lui est attribué, par exemple dans une base de données ou dans une liste tenue à cet effet. Ainsi, il est possible d'utiliser cet avatar pour ledit objet mobile à chaque fois que ledit objet mobile apparait dans une image courante de la scène.

Suivant des modes de réalisation, pour au moins un objet mobile, l'avatar peut être généré à la volée.

Dans ce cas, l'avatar peut être mémorisé dans une base de données, par exemple en association avec un identifiant de l'objet mobile de sorte qu'il peut être utilisé pour ledit objet mobile à chaque fois que ledit objet mobile apparait dans une image courante de la scène.

L'avatar peut être généré selon toute technique adéquate.

Comme indiqué plus haut l'avatar peut être de toute taille et l'invention n'est pas limitée à une taille donnée.

Suivant des modes de réalisation, pour au moins un objet mobile, la taille de l'avatar peut être ajustée en fonction de la taille de l'objet mobile.

Ainsi, il est possible de donner une représentation qui se rapproche beaucoup plus de la réalité terrain.

Suivant une caractéristique avantageuse, pour au moins un objet mobile, l'avatar peut avoir une forme similaire, ou identique à la forme dudit objet mobile.

Dans ce cas, le procédé selon l'invention peut comprendre, pour au moins un objet mobile, une étape de détection d'une forme dudit objet mobile dans l'image courante, l'avatar utilisé étant généré en fonction de ladite forme, et en particulier de sorte que l'avatar présente la même forme.

Cela permet de faciliter la distinction entre les objets mobiles se trouvant dans la scène, en particulier en cas de suivi de ces objets sur un flux d'images de ladite scène.

La détection de la forme de l'objet mobile peut être réalisée selon toute technique connue de la personne du métier.

Par exemple, la détection de la forme de l'objet mobile peut être réalisée par une détection de contour appliquée à l'objet mobile dans l'image courante. Ainsi, on obtient une forme dont les contours correspondent aux contours de l'objet mobile.

Optionnellement, cette forme peut ensuite être traitée, par exemple remplie d'une couleur, ou d'une texture, particulière.

Suivant des modes de réalisation, pour au moins deux objets mobiles, des avatars différents peuvent être utilisés. En particulier, pour tous les objets mobiles, des avatars différents peuvent être utilisés. Cela permet d'anonymiser les objets mobiles de la scène, tout en permettant de réaliser une distinction entre les objets mobiles.

Deux avatars peuvent différer l'un de l'autre par leurs tailles, leurs couleurs, leurs formes, etc. ou toute autre caractéristique visuelle.

Suivant des modes de réalisation, pour au moins deux objets mobiles, un même avatar peut être utilisé. En particulier, pour tous les objets mobiles, un même avatar peut être utilisé. Cela permet d'augmenter le degré d'anonymisation des objets mobiles de la scène.

Suivant des modes de réalisation, la phase de traitement peut être réalisée individuellement pour plusieurs images de la scène, en attribuant le même avatar à un même objet mobile apparaissant sur plusieurs images.

Ainsi, il est possible de faire un suivi anonymisé et dans le temps, d'un objet mobile se trouvant dans la scène.

Suivant des modes de réalisation, le procédé selon l'invention peut comprendre, pour au moins une image courante, une étape d'affichage de l'image finale sur un support d'affichage.

Le support d'affichage peut être de tout type, tel que par exemple un écran d'affichage, une surface d'affichage associée à un projecteur, etc.

L'étape d'affichage de l'image finale obtenue pour une image courante peut être réalisée immédiatement après la réalisation de la phase de traitement de ladite image courante.

Alternativement, l'étape d'affichage de l'image finale obtenue pour une image courante peut être réalisée postérieurement, de manière décalée dans le temps, par rapport à la réalisation de la phase de traitement. Dans ce cas, l'image finale peut être mémorisée dans une base de données en attendant d'être affichée sur le support d'affichage.

Selon un autre aspect de l'invention, il est proposé un programme d'ordinateur comprenant des instructions exécutables qui, lorsqu'elles sont exécutées par un appareil informatique, mettent en en oeuvre toutes les étapes du procédé, selon l'invention.

Le programme d'ordinateur peut être en tout langage informatique, tel que par exemple en langage machine, en C, C++, JAVA, Python, etc.

Le programme d'ordinateur peut être un unique programme d'ordinateur ou être composé de plusieurs programmes d'ordinateurs.

Selon un autre aspect de l'invention, il est proposé un dispositif d'obtention d'une représentation d'une scène comprenant des moyens configurés pour mettre en oeuvre toutes les étapes du procédé, selon l'invention.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple par le programme d'ordinateur selon l'invention.

Selon un autre aspect de l'invention, il est proposé un système comprenant :
- au moins une caméra fixe pour capter des images d'une scène, et
- une unité de traitement ;
configurés pour mettre en oeuvre toutes les étapes du procédé selon l'invention.

Au moins une caméra peut être locale ou distante à l'unité de traitement. Dans ce dernier cas, la caméra peut être en communication avec l'unité de traitement au travers d'un réseau de communication filaire ou sans fil, tel que par exemple le réseau Internet.

L'unité de traitement peut être, ou peut comprendre, le dispositif selon l'invention.

Dans le cas où le système comprend plusieurs caméras, ces dernières peuvent être distribuées dans l'espace par exemple au sein d'un lieu, tel qu'une gare ou un aéroport, ou dans une ville, ou encore le long d'une voie de circulation.

La scène peut être une scène se trouvant dans un lieu privé, ou dans un lieu public, tel qu'une gare ou un aéroport, ou dans une ville, ou encore le long d'une voie de circulation, etc.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un procédé selon l'invention ;
- la FIGURE 2 est une représentation schématique d'un exemple de réalisation non limitatif d'un dispositif selon l'invention ;
- la FIGURE 3 est une représentation schématique d'un exemple de réalisation non limitatif d'un système selon l'invention ; et
- la FIGURE 4 est une représentation schématique d'un exemple de d'une image finale obtenue par l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

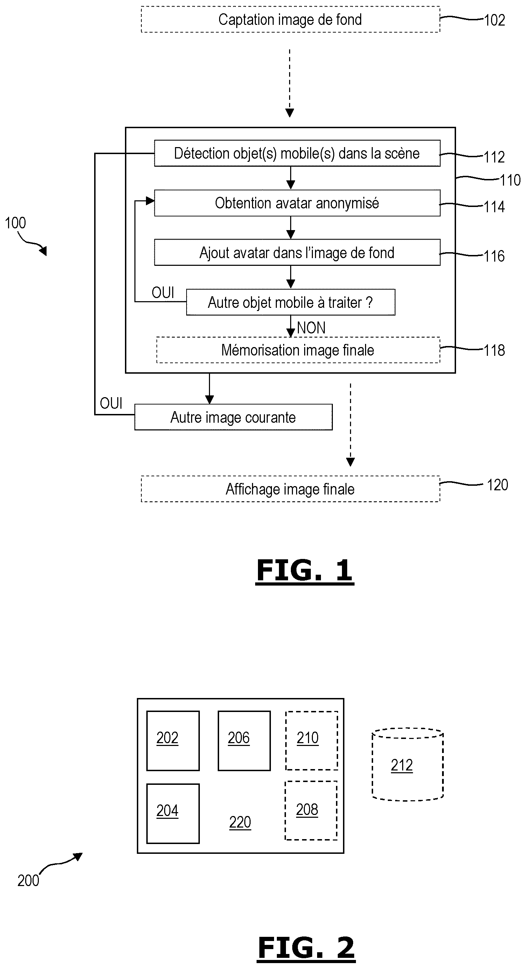

La FIGURE 1 est une représentation schématique d'un exemple de réalisation non limitatif d'un procédé selon la présente invention.

Le procédé 100 de la FIGURE 1 peut être utilisé pour l'obtention d'une représentation de tout type de scène, par exemple d'une scène se trouvant dans un lieu privé, ou d'une scène se trouvant dans lieu public tel qu'une salle de concert, une gare, un aéroport, un espace extérieur, etc.

Le procédé 100 de la FIGURE 1 peut être utilisé pour l'obtention d'une représentation d'une scène permettant d'anonymiser tout type d'objets mobiles ne faisant pas partie du fond de la scène, et en particulier des objets mobiles tels que des personnes, des animaux, des véhicules, des bagages, pouvant entrer dans la scène, bouger dans la scène, sortir de la scène, etc.

Dans la suite, et sans perte de généralité, il est considéré que chaque objet mobile est une personne humaine et la scène est un espace d'une gare délimité par le champ de vue d'une caméra fixe dans ladite gare.

Le procédé 100 comprend une étape 102, optionnelle, de captation d'une image, dite image de fond, de la scène à un moment où la scène ne comporte aucun objet mobile, c'est-à-dire aucun objet ne faisant pas partie du fond de la scène ou composant la scène de manière statique. Cette image de fond est mémorisée dans une base de données pour être utilisée ultérieurement.

Le procédé 100 comprend une phase de traitement 110. La phase de traitement est réalisée individuellement pour chaque image courante de la scène captée par une caméra fixe imageant la scène avec un champ de vue fixe, c'est-à-dire non changeante.

La phase de traitement 110 comprend une étape 112 de détection d'au moins un objet mobile dans la scène, c'est-à-dire un objet qui ne fait pas partie de la scène telle qu'imagée sur l'image de fond. Cette étape de détection 112 peut être réalisée par toute technique connue. Suivant un exemple de réalisation, l'étape de détection peut être réalisée par l'utilisation d'un outil de détection de type Yolov8. Suivant un autre exemple de réalisation, l'étape de détection 112 peut être réalisée par comparaison de l'image courante avec l'image de fond.

L'étape de détection 112 fournit au moins un, et en particulier chaque, objet mobile apparaissant dans la scène telle que représentée sur l'image courante, la position dudit objet et la taille de l'objet. Par exemple, dans le cas où un modèle Yolov8 est utilisé, l'étape de détection 112 fournit, pour chaque objet mobile détecté, une boite englobant l'objet mobile de sorte que la position et la taille de l'objet mobile sont connues.

La phase de traitement 110 comprend ensuite une étape 114 réalisée, de manière individuelle, pour au moins un, et en particulier pour chaque, objet mobile détecté lors de l'étape 112.

Lors de cette étape 114, un avatar anonymisé est obtenu. L'avatar peut être sélectionné dans une base de données. L'avatar peut être généré à la volée.

Optionnellement, la taille de l'avatar peut être ajustée lors l'étape 114 en fonction de la taille de l'objet mobile tel qu'il apparait dans l'image courante.

Optionnellement, la forme de l'avatar peut être ajustée lors l'étape 114 en fonction de la forme de l'objet mobile tel qu'il apparait dans l'image courante. Pour ce faire, le contour de l'objet mobile peut être détecté tel qu'il apparait dans l'image courante, selon une technique connue de détection de contour. Ce contour peut être adopté pour le contour de l'avatar. Cela permet de donner une indication visuelle sur la nature de l'objet sans pour autant donner une quelconque donnée personnelle relative à l'objet.

Optionnellement, la couleur et/ou la texture et/ou tout autre caractéristique visuelle de l'avatar peut être ajustée.

Optionnellement, l'avatar, ou un identifiant de l'avatar, peut être mémorisé en association avec un identifiant ou une étiquette de l'objet mobile. Cela donne la possibilité d'utiliser le même avatar lorsque ce même objet mobile apparait à nouveau sur une autre image courante traitée lors d'une autre itération de la phase de traitement 110.

Lors d'une étape 116 l'avatar anonyme obtenu lors de l'étape 114 est ajouté dans une copie de l'image de fond à la même position que la position de l'objet mobile dans l'image courante.

Lorsque plusieurs objets mobiles sont détectés dans l'image courante, les étapes 114 et 116 sont réalisées individuellement pour chaque objet mobile, à tour de rôle ou simultanément.

La copie de l'image de fond dans laquelle un avatar anonymisé a été ajouté pour chaque objet mobile détecté à l'étape 112 constitue l'image finale. Cette image finale peut être mémorisée lors d'une étape optionnelle 118.

Le procédé 100 comprend ensuite une étape optionnelle 120 lors de laquelle l'image finale est affichée sur un support d'affichage. Cette étape d'affichage 120 peut être réalisée immédiatement après obtention de l'image finale, c'est-à-dire immédiatement après la réalisation de la phase de traitement 120. Alternativement, l'étape d'affichage 120 peut être réalisée ultérieurement.

Lorsque plusieurs images courantes doivent être traitées, en particulier lorsqu'un flux d'images courantes doit être traité, la phase de traitement 110 est réalisée individuellement pour chaque image courante. La phase de traitement 110 peut être réalisée en même pour au moins deux images courantes, ou à tour de rôle.

Chaque image courante peut, de préférence, être captée par la même caméra que celle utilisée pour capter l'image de fond lors de l'étape optionnelle 102.

La phase de traitement 110 peut être réalisée juste après l'étape optionnelle 102 de captation de l'image de fond. Alternativement, la phase de traitement 110 peut être réalisée ultérieurement dans le temps par rapport à l'instant de réalisation de l'étape optionnelle 102, c'est à dire bien après la réalisation de l'étape optionnelle 102. Suivant des modes de réalisation, l'étape optionnelle 102 peut être réalisée lorsque la scène ne comporte aucun objet mobile, par exemple parce que le lieu dans lequel se trouve la scène est fermé, puis la phase de traitement 110 peut être réalisée lorsque le lieu dans lequel se trouve la scène est ouvert au public. Bien entendu, cet exemple de réalisation est donné à titre indicatif et n'est nullement limitatif.

Pour au moins une image courante de la scène, la phase de traitement 110 peut être réalisée tout de suite après la captation de ladite image courante, par exemple dans le cas d'une mise en oeuvre en temps réel du procédé 100.

Alternativement, pour au moins une image courante de la scène, la phase de traitement 110 peut être réalisée ultérieurement bien après la captation de ladite image courante, par exemple lorsque le procédé 100 n'est pas mis en oeuvre en temps réel. Dans ce cas, ladite image courante peut être mémorisée en attendant la réalisation de la phase de traitement 110 pour ladite image courante.

Lorsqu'un flux d'images courantes est traité, le procédé 100 peut fournir un flux d'images finales, chaque image finale comportant un avatar à la place d'un objet mobile, et donc aucune donnée personnelle relative à l'objet.

La FIGURE 2 est une représentation schématique d'un exemple de réalisation non limitatif d'un dispositif selon l'invention.

Le dispositif 200 peut être utilisé pour mettre en oeuvre un procédé selon l'invention, et en particulier le procédé 100 de la FIGURE 1 .

Le dispositif 200 comprend un module 202 de détection d'au moins un objet mobile dans une image courante. Ce module de détection 202 peut être configuré pour exécuter un modèle d'intelligence artificielle, et en particulier un réseau neuronal, préalablement entrainé pour détecter la présence d'un objet dans une image. Un tel modèle peut être le modèle Yolov8. En particulier, le module 202 peut en particulier être configuré pour mettre en oeuvre l'étape 112 du procédé 100.

Le dispositif 200 comprend un module 204 d'obtention d'un avatar anonyme pour au moins un objet mobile détecté dans une image courante. Ce module 204 peut en particulier être configuré pour mettre en oeuvre l'étape 114 du procédé 100.

Le dispositif 200 comprend un module 206 d'ajout d'un avatar anonyme associé à un objet mobile apparaissant dans une image courante dans une copie de l'image de fond. Ce module 206 peut en particulier être configuré pour mettre en oeuvre l'étape 116 du procédé 100.

Le dispositif 200 peut en outre optionnellement comprendre un module de commande 208 déclenchant l'affichage d'au moins une image finale sur un support d'affichage. Ce module de commande optionnel 208 peut en particulier être configuré pour mettre en oeuvre l'étape 120 du procédé 100.

Le dispositif 200 peut en outre optionnellement comprendre un module de commande 210 déclenchant la captation, ou l'acquisition, d'une image, et en particulier de l'image de fond et/ou d'au moins une image courante. Ce module de commande optionnel 210 peut en particulier être configuré pour mettre en oeuvre l'étape optionnelle 102 du procédé 100.

Le dispositif 200 peut en outre optionnellement comprendre un moyen de mémorisation 212 pour mémoriser des images, et en particulier au moins une image finale. Ce moyen de mémorisation optionnel 212 peut en particulier être configuré pour mettre en oeuvre l'étape 118 du procédé 100.

Au moins un des modules 202-210 peut être un module indépendant des autres modules 202-210 .

Au moins deux des modules 202-210 peuvent intégrés au sein d'un même module. En particulier, les modules 202-210 peuvent être intégrés au sein d'une unité de calcul 220.

Au moins un des modules 202-210 peut être un module matériel, tel qu'un processeur, une puce électronique, etc.

Au moins un des modules 202-210 peut être un module logiciel, tel qu'un programme d'ordinateur.

Au moins un des modules 202-210 peut être une combinaison d'au moins un module logiciel et d'au moins un module matériel.

En particulier, au moins un des modules 202-210 peut être intégré dans une puce électronique, ou encore dans une application installée dans un appareil utilisateur.

En particulier, l'unité de calcul 220 peut être, ou peut être intégrée, dans une puce électronique, ou encore dans une application installée dans un appareil utilisateur.

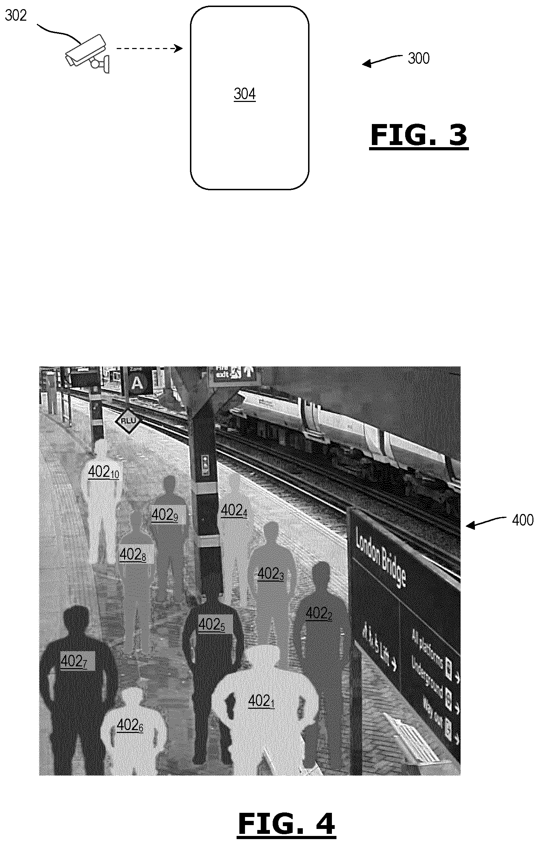

La FIGURE 3 est une représentation schématique d'un exemple de réalisation non limitatif d'un système selon l'invention.

Le système 300 peut être utilisé pour mettre en oeuvre un procédé selon l'invention, et en particulier le procédé 100 de la FIGURE 1.

Le système 300 comprend une caméra 302, prévue pour installée, de manière fixe, dans un lieu, en vue de capter une image de fond et/ou au moins une image courante d'une scène dans ledit lieu.

Le système 300 comprend en outre une unité de calcul 304 pour mettre en oeuvre les étapes d'un procédé selon l'invention, et en particulier le procédé 100. En particulier, l'unité de calcul 304 peut être, ou peut comprendre, le dispositif 200 de la FIGURE 2 ou l'unité de calcul 220 du dispositif 200.

L'unité de calcul 304 peut être locale à la caméra 302 ou distant de la caméra 302.

L'unité de calcul 302 peut être reliée à la caméra 302 par une connexion filaire ou sans fil.

La FIGURE 4 est une représentation schématique d'un exemple de réalisation non limitatif d'une image finale qui peut être obtenue par la présente invention.

L'image finale 400 représente une scène dans une gare recevant du public. Bien entendu, cet exemple de réalisation n'est nullement limitatif et n'est donné qu'à titre d'illustration.

L'image finale 400 est obtenue en superposant, sur une image de fond d'une scène, des avatars anonymes 402₁-402₁₀ représentant chacun une personne présente dans la scène au moment où une image courante a été captée. Ainsi, il est possible de :
- localiser chaque personne, et/ou
- de déterminer le nombre de personnes dans la scène, et/ou
- de déterminer la densité de personnes dans la scène, et/ou
- de suivre chaque personne dans la scène et/ou
- de suivre l'évolution de l'un quelconque de ces paramètres dans le temps ;
sans exposer l'identité de ces personnes, ni aucune donnée personnelle relative à ces personnes.

De plus, et surtout, il n'est nullement possible de déduire, de l'image finale 400, une quelconque donnée personnelle relative à l'une quelconque des personnes se trouvant dans l'image finale, même avec une technique de dé-floutage, ou de reverse engineering, appliquée à l'image finale 400.

Dans l'exemple donné, la forme des avatars utilisés pour représenter les personnes présentes est identique. Par contre, la taille de chaque avatar a été ajustée en fonction de la taille de la personne telle qu'elle apparait dans l'image courante à partir de laquelle l'image finale a été obtenue.

Bien entendu l'invention n'est pas limitée aux exemples qui viennent d'être décrits.

## Revendications

1. Procédé (100) d'obtention d'une représentation d'une scène à partir d'images captées par une caméra (302) filmant ladite scène de manière statique de sorte que le champ de vue de ladite caméra (302) est fixe, ledit procédé (100) comprenant au moins une itération d'une phase (110) de traitement, réalisée pour au moins une nouvelle image de la scène, dite image courante, captée par ladite caméra (302) et comprenant au moins un objet mobile, ladite phase de traitement (110) comprenant les étapes suivantes :
- détection (112) d'au moins un objet mobile dans ladite image courante,
- pour au moins un objet mobile (112) :
▪obtention d'un avatar (402₁-402₁₀) ne comprenant aucun pixel appartenant audit objet mobile dans ladite image courante ;
▪ajout dudit avatar dans une image, dite image de fond, de ladite scène à la même position que ledit objet mobile dans ladite image courante, ladite image de fond étant préalablement captée et ne comprenant pas d'objet mobile ;
de sorte à obtenir une image (400), dite finale, de ladite scène.

2. Procédé (100) selon la revendication 1, **caractérisé en ce qu'**il comprend, préalablement à la première itération de la phase de traitement (110) une étape (102) de captation de l'image de fond.

3. Procédé (100) selon l'une quelconque des revendications précédentes, **caractérisé en ce que** la détection d'au moins un objet mobile dans la scène est réalisée par un modèle d'intelligence artificielle, par exemple de type YOLO.

4. Procédé (100) selon l'une quelconque des revendications précédentes, **caractérisé en ce que**, pour au moins un objet mobile, l'avatar (402₁-402₁₀) est sélectionné dans une base de données.

5. Procédé (100) selon l'une quelconque des revendications précédentes, **caractérisé en ce que**, pour au moins un objet mobile, l'avatar (402₁-402₁₀) est généré à la volée.

6. Procédé (100) selon l'une quelconque des revendications précédentes, **caractérisé en ce que**, pour au moins un objet mobile, la taille de l'avatar (402₁-402₁₀) est ajustée en fonction de la taille de l'objet mobile.

7. Procédé (100) selon l'une quelconque des revendications précédentes, **caractérisé en ce qu'**il comprend, pour au moins un objet mobile, une détection d'une forme dudit objet mobile, l'avatar utilisé étant généré en fonction de ladite forme, et en particulier de sorte que l'avatar présente la même forme.

8. Procédé (100) selon l'une quelconque des revendications précédentes, **caractérisé en ce que**, pour au moins deux objets mobiles, des avatars différents sont utilisés.

9. Procédé (100) selon l'une quelconque des revendications précédentes, **caractérisé en ce que** la phase de traitement (110) est réalisée individuellement pour plusieurs images de la scène, en attribuant le même avatar (402₁-402₁₀) à un même objet mobile apparaissant sur plusieurs images.

10. Procédé (100) selon l'une quelconque des revendications précédentes, **caractérisé en ce qu'**il comprend, pour au moins une image courante, une étape (120) d'affichage de l'image finale (400) sur un support d'affichage.

11. Programme d'ordinateur comprenant des instructions exécutables qui, lorsqu'elles sont exécutées par un appareil informatique, mettent en en oeuvre toutes les étapes du procédé (100) selon l'une quelconque des revendications précédentes.

12. Dispositif (200) comprenant des moyens configurés pour mettre en oeuvre toutes les étapes du procédé selon l'une quelconque des revendications 1 à 9.

13. Système (300) comprenant :
- au moins une caméra (302) fixe pour capter des images d'une scène, et
- une unité de traitement (304) ;
configurés pour mettre en oeuvre toutes les étapes du procédé (100) selon l'une quelconque des revendications 1 à 9.
